# EUROPÄISCHE PATENTSCHRIFT

(11) **EP 1 250 964 B1**
(45) Veröffentlichungstag und Bekanntmachung des Hinweises auf die Patenterteilung: **13.09.2006**
(21) Anmeldenummer: 02007856.4
(22) Anmeldetag: 08.04.2002
(51) Int. Cl.: B05B 15/06

(54) **Verfahren und Ventilanordnung für die Flüssigkeitsversorgung eines abkuppelbaren Teils einer Beschichtungsanlage**
Method and valve arrangement for supplying liquid to a disconnectable element of a coating installation
Procédé et valve d'alimentation en liquide d'un élément désaccoupable d'une installation de revêtement

(30) Priorität: 20.04.2001 DE 10119520
(43) Veröffentlichungstag der Anmeldung: 23.10.2002
(73) Patentinhaber: Dürr Systems GmbH, 70435 Stuttgart (DE)
(72) Erfinder: Nolte, Hans-Jürgen, Dr., 70565 Stuttgart (DE); Herre, Frank, 71739 Oberriexingen (DE); Krumma, Harry, 74357 Bönnigheim (DE); Baumann, Michael, 74223 Flein (DE); Giuliano, Stefano, 70839 Gerlingen (DE); Melcher, Rainer, 71720 Oberstenfeld (DE)
(74) Vertreter: Heusler, Wolfgang

(56) Entgegenhaltungen:
- EP-A- 0 310 358
- EP-A- 0 446 963
- DE-A1- 4 242 715
- FR-A- 2 674 773

## Beschreibung

Die Erfindung betrifft ein Verfahren für die Flüssigkeitsversorgung eines abkuppelbaren Teils einer Beschichtungsanlage und eine für dieses Verfahren geeignete Ventilanordnung gemäß dem Oberbegriff der unabhängigen Patentansprüche wie offenbart im EP 0 310 358.

Es kann sich hier insbesondere um eine Beschichtungsanlage für die Serienbeschichtung beispielsweise von Fahrzeugkarossen handeln, deren Zerstäuber lösbar und auswechselbar an Lackierrobotern oder sonstigen Beschichtungsmaschinen montiert und zum Auswechseln in einer externen Wechselstation abgelegt werden. Die Zerstäuber können einen eingebauten Farblackbehälter mit einem Dosierkolben enthalten, für dessen Antrieb im Betrieb von einer außerhalb des Zerstäubers befindlichen Dosierpumpe eine Dosierflüssigkeit in den Zerstäuber geleitet wird. Da der Zerstäuber typisch nach jedem Lackiervorgang zum Farbwechsel oder zum Nachfüllen des Farbbehälters von der Maschine abgenommen und ausgetauscht wird, muss auch jedesmal die Zufuhrleitung der Dosierflüssigkeit an- und abgekoppelt werden. Hierbei ergibt sich das Problem, dass die Dosiergenauigkeit, also das Nennverhältnis zwischen dem Volumen der zugeführten Dosierflüssigkeit und dem vom Kolben des Dosierzylinders des Zerstäubers verdrängten Lackvolumen durch Lufteinschlüsse in der Dosierflüssigkeitsleitung beeinträchtigt wird. Bei häufigen Zerstäuberwechselvorgängen können selbst geringe Lufteinschlüsse zu Funktionsstörungen führen, die bisher nicht verhindert werden konnten. Lufteinschlüsse an Kupplungsstellen können auch in anderen Flüssigkeitsleitungen lösbarer Zerstäuber oder sonstiger zu versorgender Teile von Beschichtungsanlagen stören, insbesondere in Farbleitungen.

Aufgabe der Erfindung ist, störende Lufteinschlüsse beim Anund Abkuppeln eines Zerstäubers oder sonstigen zu versorgenden Teils einer Beschichtungsanlage zu vermeiden.

Diese Aufgabe wird durch die Merkmale der Patentansprüche gelöst.

Durch die Erfindung wird bei An- und Abkoppelvorgängen jeweils zuverlässig verhindert, dass in das Verbindungssystem Luft eindringen kann. Es genügt, wenn das System nur einmalig bei der Erstbefüllung entlüftet worden ist.

Im Fall von Dosierflüssigkeitsleitungen wird durch die Erfindung optimale Dosiergenauigkeit erreicht, da das hydraulische System auch bei häufigem An- und Abkuppeln des zu versorgenden Anlagenteils immer vollständig und ohne Lufteinschlüsse mit dem inkompressiblen Dosiermedium gefüllt bleiben kann. Vergleichbare Vorteile ergeben sich in Farbleitungskupplungen.

Die erfindungsgemäße Ventilanordnung hat darüber hinaus auch Vorteile hinsichtlich der Spülbarkeit und des zum Spülen erforderlichen Spülmedien- und Zeitaufwands.

An dem in der Zeichnung dargestellten Ausführungsbeispiel wird die Erfindung näher erläutert. Es zeigen
Fig. 1 eine Schnittansicht einer Leitungskupplung mit einer Ventilanordnung zwischen zwei im zusammengekuppelten Zustand dargestellten Anlagenteilen; und
Fig. 2 einen Schnitt durch den Versorgungsteil der Anlage längs der Ebene A-A in Fig. 1.

Bei den dargestellten Anlagenteilen 1 und 2 kann es sich um die zusammengekuppelten Flanschteile eines Lackierroboters und seines lösbaren und auswechselbaren Zerstäubers handeln, die eine Ventilanordnung zum Ankuppeln einer maschinenseitigen Leitung 4 für eine Dosierflüssigkeit an eine in den Zerstäuber führende Dosierflüssigkeitsleitung 5 enthalten.

In der dem maschinenseitigen Anlagenteil 1 zugewandten Stirnfläche des zu versorgenden zerstäuberseitigen Teils 2 ist ein Rückschlagventil 6 mit einer Kugel 7 angeordnet, die in der von einem O-Ring 8 begrenzten und abgedichteten Ventilöffnung am maschinenseitigen Ende der Leitung 5 sitzt und von einer Feder 9 gegen den O-Ring 8 in die Schließstellung gedrückt wird. Zur Zentrierung bezüglich des maschinenseitigen Teils 1 kann das Rückschlagventil 6 darstellungsgemäß mit seinem die Kugel 7 enthaltenden Teil in eine entsprechende Ausnehmung in der gegenüberliegenden Stirnfläche des Anlagenteils 2 vorspringen. Zur gegenseitigen Abdichtung ist an dieser Stelle ein Dichtring 10 vorgesehen.

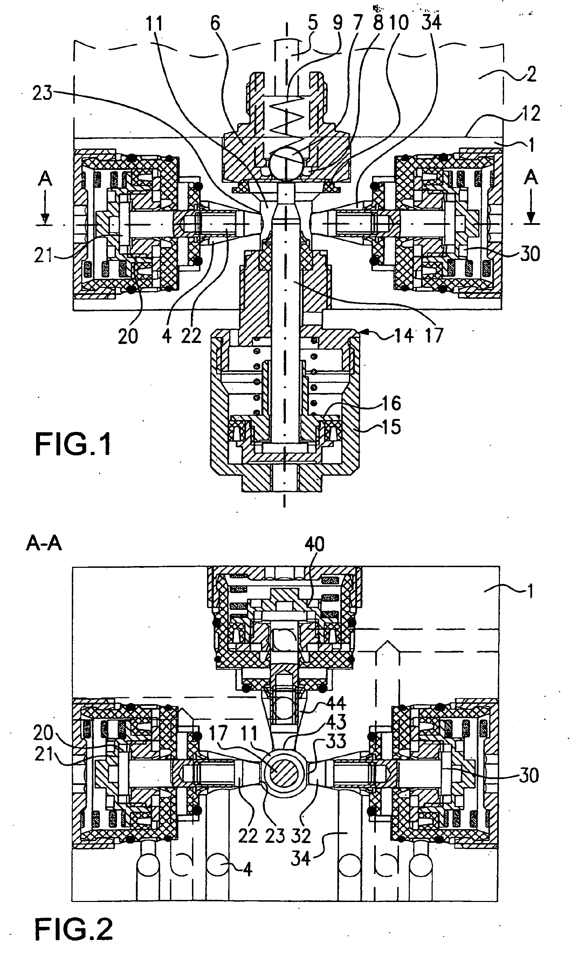

Das fest mit der Maschine verbundene Anlagenteil 1 enthält angrenzend an die Öffnung des Ventils 6 einen inneren Kupplungsraum 11 beispielsweise der dargestellten zylindrischen Form mit einer quer zu der Trennebene 12 der Teile 1 und 2 verlaufenden Längsachse. Auf seiner dem Ventil 6 gegenüberliegenden Seite ist der Kupplungsraum 11 durch eine beispielsweise koaxial in das Teil 1 eingeschraubte pneumatische Betätigungseinrichtung 14 für das Rückschlagventil 6 abgeschlossen, die einen zu dem Kupplungsraum 11 koaxialen Pneumatikzylinder 15 mit einem darin verschiebbaren Kolben 16 enthält. An dem Kolben ist ein Stößel 17 befestigt, der sich koaxial zu der Mittelachse des Kupplungsraums 11 durch diesen hindurch erstreckt und mit seinem freien Ende gegen die Kugel 7 stößt. Zum Öffnen des Ventils 6 wird der Kolben 16 in Fig. 1 nach oben bewegt, so dass der Stößel 17 die Kugel 7 gegen die Kraft der Feder 9 axial nach innen drückt und von dem Ventilsitz, also von dem O-Ring 8 abhebt.

In dem maschinenseitigen Teil 1 ist zwischen die Versorgungsleitung 4 für das Dosiermedium und das zerstäuberseitige Rückschlagventil 6 ein z. B. pneumatisch gesteuertes Ventil 20 geschaltet. Das Ventil 20 kann die dargestellte an sich bekannte Konstruktion mit einem Kolben 21 und einem Nadelglied 22 haben, dessen konisches Ende die Auslassöffnung 23 der Leitung 4 verschließt bzw. im zurückgezogenen Zustand freigibt. Die verschließbare Auslassöffnung 23 oder anders gesagt das Stirnende des in der Schließposition befindlichen Nadelglieds 22 fluchtet darstellungsgemäß mit der zylindrischen Wand des Kupplungsraums 11, in den die Leitung 4 mündet.

Beispielsweise koaxial zu dem das Dosiermedium zuführenden Ventil 20 ist auf der ihm gegenüberliegenden Seite des Kupplungsraums 11 ein weiteres pneumatisch angesteuertes Ventil 30 angeordnet, das dieselbe Konstruktion und Lage haben kann wie das Ventil 20, also ebenfalls mit seiner Öffnung 33 bzw. dem Stirnende seines in Schließstellung gezeigten Nadelglieds 32 mit der Wand des Kupplungsraums 11 fluchtet. Das Ventil dient zum Öffnen und Schließen eines aus der betrachteten Anordnung herausführenden Rückführkanals 34, durch den überschüssiges Dosiermedium entsorgt werden kann.

Wie in Fig. 2 zu sehen ist, mündet zwischen den Ventilen 20 und 30 ein drittes pneumatisch angesteuertes Ventil 40 an seiner Auslassöffnung 43 in den Kupplungsraum 11. Das Ventil 40 dient zum Öffnen und Schließen einer Druckluftleitung 44 und kann ebenfalls dieselbe Konstruktion und Lage haben wie die Ventile 20 und 30. Die Achsen der drei Ventile 20, 30 und 40 liegen zweckmäßig in derselben Ebene.

Alle Ventilöffnungen 23, 33 und 43 liegen also (wie auch die Öffnung des Rückschlagventils 6) direkt am Kupplungsraum 11, so dass bei geschlossenen Ventilen aus seinem beispielsweise zylindrischen Innenraum keine wesentlichen Räume abzweigen. Anders gesagt ist der die zerstäuber- und maschinenseitigen Medienventile miteinander verbindende Bereich praktisch totraumfrei. Tote Räume sind nicht nur wegen möglicher Lufteinschlüsse unerwünscht, sondern auch schwierig zu spülen und zu reinigen.

Die Herstellung einer vollkommen luftfreien Flüssigkeitsverbindung zwischen den Teilen 1 und 2, bei dem betrachteten Beispiel also einer Leitungsverbindung für Dosiermedium zwischen einer Lackiermaschine und ihrem Zerstäuber ist durch den folgenden Betriebsablauf möglich:
Durch Ankuppeln des Zerstäubers an die Lackiermaschine (oder beispielsweise durch Ankuppeln des Handgelenks eines Lackierroboters an den in einer Wechselstation bereitstehenden Zerstäuber) werden die beiden Teile 1 und 2 miteinander verbunden. Über den Dichtring 10 wird hierbei der Kupplungsraum 11 nach außen abgedichtet.
Nach Öffnen der Ventile 20 und 30 wird nun der Kupplungsraum 11 mit dem Dosiermedium befüllt, wobei vorhandene Luft in den Rückführkanal 34 verdrängt wird. Zur Sicherstellung vollständiger Luftfreiheit wird auch eine geringe Menge an Dosiermedium in den Rückführkanal 34 gedrückt.
Nach Schließen des Rückführventils 30 wird sodann der Pneumatikzylinder 15 der Betätigungseinrichtung 14 angesteuert und folglich die Kugel 7 des Rückschlagventils 6 aus ihrem Dichtsitz abgehoben. Nun strömt das Dosiermedium aus dem Kupplungsraum 11 in das Rückschlagventil 6 und durch die Leitung 5 in den Zerstäuber. Die gewünschte luftfreie Ankupplung ist hergestellt.
Beim Abkuppeln wird in umgekehrter Reihenfolge verfahren: Zunächst wird über den Pneumatikzylinder 15 das Rückschlagventil 6 geschlossen. Auch das Ventil 20 wird geschlossen. Dadurch wird auch beim Abkuppeln sichergestellt, dass keine Luft in die Dosiermediumleitung eindringt. Anschließend wird das Rückführventil 30 geöffnet. Durch Öffnen des Blasluftventils 40 wird aus dem Kupplungsraum 11 das dort verbliebene Dosiermedium in den Rückführkanal 34 geblasen, um Verschmutzungen der Kupplungsstelle zu vermeiden. Danach können der Zerstäuber und die Lackiermaschine voneinander getrennt werden.
Durch die beschriebene Anordnung der Ventile 20, 30 und 40 wird erreicht, dass das beim Abkuppeln entstehende Luftvolumen so gering wie möglich ist und durch den beschriebenen Ankuppelvorgang sicher und schnell durch die Befüllung beseitigt wird. Ein wichtiger Vorteil ergibt sich ferner daraus, dass die Öffnung des Rückschlagventils 6 mittels des Pneumatikzylinders 15 der Betätigungseinrichtung 14 durch einen unabhängigen, zeitlich frei wählbaren Steuerimpuls erfolgen kann, wodurch sichergestellt werden kann, dass das vorhandene Volumen des Kupplungsraums 11 zunächst vollständig mit Dosiermedium befüllt wird, bevor die Leitungsverbindung zum Dosierbehälter im Zerstäuber hergestellt wird.
Die Erfindung ist nicht auf den erläuterten Anwendungsfall beschränkt. Beispielsweise kann die beschriebene Ventilanordnung auch im Farbversorgungssystem eines an- und abkuppelbaren Zerstäubers angeordnet sein. Das Anlagenteil 1 kann sich in diesem Fall auch in der Zerstäuberwechselstation befinden, in der der Zerstäuber zum Nachfüllen des Farbbehälters abgelegt wird.

## Patentansprüche

1. Verfahren für die Flüssigkeitsversorgung eines abkuppelbaren Teils einer Beschichtungsanlage zur Serienbeschichtung von Werkstücken
unter Verwendung einer Ventilanordnung mit in dem abkuppelbaren zu versorgenden Teil (2) und in dem Versorgungsteil (1) der Anlage befindlichen Ventilen (6, 20) für die Flüssigkeit, die beim Abkuppeln geschlossen und nach dem Ankuppeln geöffnet werden,
**dadurch gekennzeichnet, dass** nach dem Zusammenkuppeln der beiden Anlagenteile (1, 2) zunächst bei geschlossenem Ventil (6) des zu versorgenden Anlagenteils (2) der zwischen ihm und dem Ventil (20) des Versorgungsteils (1) gebildete Kupplungsraum (11) mit der Flüssigkeit gefüllt und in diesem Raum (11) befindliche Luft von der Flüssigkeit in einen aus dem Raum (11) abzweigenden Kanal (34) herausgedrückt wird,
dass anschließend die Verbindung (33) des Kupplungsraums (11) mit dem abzweigenden Kanal (34) geschlossen wird,
und dass dann der Flüssigkeitsweg (5) in das zu versorgende Anlagenteil (2) geöffnet wird.

2. Verfahren nach Anspruch 1, **dadurch gekennzeichnet, dass** nach dem Zusammenkuppeln das Ventil (6) des zu versorgenden Anlagenteils (2) von einer gesteuerten Betätigungseinrichtung (14) erst zu einem vorbestimmten, durch ein Steuersignal definierten Zeitpunkt nach dem Öffnen des Flüssigkeitsventils (20) des Versorgungsteils (1) geöffnet wird.

3. Verfahren nach Anspruch 1 oder 2, **dadurch gekennzeichnet, dass** beim Abkuppeln vor dem Trennen der Anlagenteile (1, 2) zunächst die beiden Flüssigkeitsventile (6, 20) geschlossen werden, der abzweigende Kanal (30) geöffnet wird und durch Öffnen eines in den Kupplungsraum (11) führenden Blasluftventils (40) verbliebene Flüssigkeit in diesen Kanal (30) geblasen wird.

4. Ventilanordnung einer Beschichtungsanlage für die Serienbeschichtung von Werkstücken, insbesondere zur Durchführung des Verfahrens nach Anspruch 1,
mit zwei jeweils an eine Flüssigkeitsleitung (4, 5) angeschlossenen Ventilen (20, 6), von denen sich das eine Ventil (6) in einem zu versorgenden Anlagenteil (2) und das andere, an die Versorgungsleitung (4) angeschlossene Ventil (20) in einem Versorgungsteil (1) der Anlage befindet, welches mit dem zu versorgenden Anlagenteil (2) zusammenkuppelbar und von ihm lösbar ist,
und zwischen denen ein Kupplungsraum (11) gebildet ist, wenn die Anlagenteile (1, 2) zusammengekuppelt sind,
wobei das Ventil (6) des zu versorgenden Anlagenteils (2) von einer in dem Versorgungsteil (1) befindlichen Betätigungseinrichtung (14) geöffnet und geschlossen wird,
**dadurch gekennzeichnet, dass** aus dem Kupplungsraum (11) ein Kanal (34) abzweigt, der aus der Ventilanordnung herausführt und an der Stelle (33) seiner Verbindung mit dem Kupplungsraum (11) durch ein Ventil (30) verschließbar ist.

5. Ventilanordnung nach Anspruch 4 oder dessen Oberbegriff, **dadurch gekennzeichnet, dass** das Ventil (6) des zu versorgenden Anlagenteils (2) durch ein Rückschlagventil gebildet ist, das bei abgekoppeltem Anlagenteil (2) geschlossen ist,
und dass die Ventilbetätigungseinrichtung (14) für das Rückschlagventil (6) bei angekuppeltem Anlagenteil (2) zwischen zwei Stellungen umsteuerbar ist, bei denen sie das Rückschlagventil (6) öffnet bzw. schließt.

6. Ventilanordnung nach Anspruch 5, **dadurch gekennzeichnet, dass** die Ventilbetätigungseinrichtung (14) eine Zylindereinheit (15) mit einem darin pneumatisch verschiebbaren Kolben (16) und einem mit dem Kolben (16) verbundenen Stößel (17) enthält, der den Kupplungsraum (11) durchsetzt und zum Öffnen des Rückschlagventils (6) dessen bewegliches Verschließelement (7) betätigt.

7. Ventilanordnung nach Anspruch 6, **dadurch gekennzeichnet, dass** das Verschließelement (7) des Rückschlagventils (6) eine gegen die Rückstellkraft einer Feder (9) bewegbare Kugel ist.

8. Ventilanordnung nach einem der Ansprüche 4 - 7, **dadurch gekennzeichnet, dass** das Flüssigkeitsventil (20) des Versorgungsteils (1) der Anlage durch ein gesteuertes Ventil gebildet ist, mit dem die Versorgungsleitung (4) an der Stelle der Verbindung mit dem Kupplungsraum (11) verschließbar ist.

9. Ventilanordnung nach einem der Ansprüche 4 - 8, **dadurch gekennzeichnet, dass** der Kupplungsraum (11) auf seiner einen Seite, die dem zu versorgenden Anlagenteil (2) zugewandt ist, durch dessen Ventil (6) und auf seiner entgegengesetzten Seite durch die Betätigungseinrichtung (14) dieses Ventils abgeschlossen ist, und dass die verschließbare Ventilöffnung (23) des Flüssigkeitsventils (20) des Versorgungsteils (1) der Anlage und die verschließbare Ventilöffnung (33) des Ventils (30) des abzweigenden Kanals (34) wenigstens annähernd mit der Wand des Kupplungsraums (11) fluchten, welche den Raum zwischen dem Ventil (6) des zu versorgenden Anlagenteils (2) und dessen Betätigungseinrichtung (14) begrenzt,
so dass alle verschließbaren Ventilöffnungen (23, 33) unmittelbar an dem begrenzten Kupplungsraum (11) liegen.

10. Ventilanordnung nach einem der Ansprüche 4 - 9, **dadurch gekennzeichnet, dass** in den Kupplungsraum (11) eine Druckluftleitung. über ein gesteuertes Ventil (40) mündet, dessen verschließbare Öffnung (43) wenigstens annähernd mit der Wand des Kupplungsraums (11) fluchtet.

11. Beschichtungsanlage mit einer Ventilanordnung nach einem der Ansprüche 4 - 10, wobei das zu versorgende Anlagenteil (2) ein lösbar und auswechselbar an einem Lackierroboter oder einer sonstigen Beschichtungsmaschine montierbarer Zerstäuber ist.

12. Beschichtungsanlage nach Anspruch 11, **dadurch gekennzeichnet, dass** sich das Versorgungsteil (1) der Anlage mit seinen an den Kupplungsraum (11) angeschlossenen Ventilen (20, 30, 40) in der Beschichtungsmaschine befindet.

13. Beschichtungsanlage nach Anspruch 11 oder 12, **dadurch gekennzeichnet, dass** die Ventilanordnung an eine in den Zerstäuber führende Leitung (4, 5) für Dosierflüssigkeit angeschlossen ist, die in dem Zerstäuber einen Kolben eines Beschichtungsmaterial enthaltenden Zylinders antreibt.

14. Beschichtungsanlage nach Anspruch 11 oder 12, **dadurch gekennzeichnet, dass** die Ventilanordnung an eine in den Zerstäuber führende Leitung für Beschichtungsmaterial angeschlossen ist.

## Claims

1. Method of supplying fluid to a disconnectable part of a coating installation for series coating of workpieces using a valve arrangement with valves (6, 20) for the fluid which are located in the disconnectable part (2) to be supplied and in the supply part (1) of the installation and which are closed during disconnection and opened after connection, **characterised in that**, after the coupling together of the two parts (1, 2) of the installation, first of all with the valve (6) of the part (2) of the installation to be supplied closed the coupling space (11) formed between it and the valve (20) of the supply part (1) is filled with the fluid and air located in this space (11) is forced out by the fluid into a channel (34) which branches off from the space (11), that next the connection (33) of the coupling space (11) to the branch channel (34) is closed, and that then the fluid path (5) into the part (2) of the installation to be supplied is opened.

2. Method as claimed in Claim 1, **characterised in that** after the coupling together the valve (6) of the part (2) of the installation to be supplied is opened by a controlled actuating device (14) only at a predetermined time defined by a control signal after the opening of the fluid valve (20) of the supply part (1).

3. Method as claimed in Claim 1 or 2, **characterised in that** during disconnection before the separation of the parts (1, 2) of the installation first of all the two fluid valves (6, 20) are closed, the branch channel (30) is opened and remaining fluid is blown into this channel (30) by opening of a blown air valve (40) leading into the coupling space (11).

4. Valve arrangement of a coating installation for the series coating of workpieces, in particular for carrying out the method as claimed in Claim 1, with two valves (20, 6) which are each connected to a fluid line (4, 5) and of which one valve (6) is located in a part (2) of the installation to be supplied and the other valve (20) is connected to the supply line (4) and is located in a supply part (1) of the installation which can be coupled together with the part (2) of the installation to be supplied and can be detached therefrom, a coupling space (11) being formed between the said valves when the parts (1, 2) of the installation are coupled together, wherein the valve (6) of the part (2) of the installation to be supplied is opened and closed by an actuating device (14) located in the supply part (1), **characterised in that** a channel (34) branches off from the coupling space (11), leads out of the valve arrangement and can be closed by a valve (30) at the location (33) of its connection to the coupling space (11).

5. Valve arrangement as claimed in Claim 4 or according to the preamble thereto, **characterised in that** the valve (6) of the part (2) of the installation to be supplied is formed by a non-return valve which is closed when the part (2) of the installation is disconnected, and that when the part (2) of the installation is connected the valve actuating device (14) for the non-return valve (6) is reversible between two positions in which it opens or closes the non-return valve (6).

6. Valve arrangement as claimed in Claim 5, **characterised in that** the valve actuating device (14) contains a cylinder unit (15) with a piston (16) which is pneumatically displaceable therein and a push rod (17) which is connected to the piston (16), passes through the coupling space (11) and for opening of the non-return valve actuates the movable closure element (7) thereof.

7. Valve arrangement as claimed in Claim 6, **characterised in that** the closure element (7) of the non-return valve (6) is a ball which is movable against the restoring fore of a spring (9).

8. Valve arrangement as claimed in any one of Claims 4 to 7, **characterised in that** the fluid valve (20) of the supply part (1) of the installation is formed by a controlled valve by which the supply line (4) can be closed at the location of the connection to the coupling space (11).

9. Valve arrangement as claimed in any one of Claims 4 to 8, **characterised in that** the coupling space (11) is closed on one side facing the part (2) of the installation to be supplied by the valve (6) thereof and on the opposite side by the actuating device (14) of this valve, and that the closable valve opening (23) of the fluid valve (20) of the supply part (1) of the installation and the closable valve opening (33) of the valve (30) of the branch channel (34) are at least approximately aligned with the wall of the coupling space (11) which delimits the space between the valve (6) of the part (2) of the installation to be supplied and the actuating device (14) thereof, so that all closable valve openings (23, 33) directly adjoin the delimited coupling space (11).

10. Valve arrangement as claimed in any one of Claims 4 to 9, **characterised in that** a compressed air line opens into the coupling space (11) by way of a controlled valve (40), the closable opening (43) of which is at least approximately aligned with the wall of the coupling space (11).

11. Coating installation with a valve arrangement as claimed in any one of Claims 4 to 10, wherein the part (2) of the installation to be supplied is an atomiser which can be mounted detachably and replaceably on a painting robot or some other coating machine.

12. Coating installation as claimed in Claim 11, **characterised in that** the supply part (1) of the installation with its valves (20, 30, 40) connected to the coupling space (11) is located in the coating machine.

13. Coating installation as claimed in Claim 11 or 12, **characterised in that** the valve arrangement is connected to a line (4, 5) for metered fluid which leads into the atomiser and which in the atomiser drives a cylinder containing a piston for a coating material.

14. Coating installation as claimed in Claim 11 or 12, **characterised in that** the valve arrangement is connected to a line for coating material which leads into the atomiser.

## Revendications

1. Procédé pour l'alimentation en liquide d'une partie démontable d'une installation pour le revêtement en série de pièces,
moyennant l'utilisation d'un système de soupapes comportant des soupapes (6, 20) pour le liquide, qui sont montées dans la partie (2) démontable à alimenter et la partie (1) d'alimentation de l'installation et qui sont fermées lors du découplage et s'ouvrent après le couplage,
**caractérisé en ce que**, après le couplage des deux parties (1, 2) de l'installation, tout d'abord, lorsque la soupape (6) de la partie à alimenter (2) est fermée, le liquide est introduit dans l'espace de couplage (11) formé entre ladite soupape (6) et la soupape (20) de la partie d'alimentation (1) et l'air contenu dans cet espace (11) est poussé par le liquide hors de l'espace (11) dans un canal (34) dérivé vers l'extérieur de celui-ci,
**en ce que**, ensuite, la liaison (33) de l'espace de couplage (11) avec le canal (34) dérivé est fermée,
et **en ce que**, ensuite, la conduite de liquide (5) s'ouvre vers la partie à alimenter (2).

2. Procédé selon la revendication 1, **caractérisé en ce que**, après le couplage, la soupape (6) de la partie à alimenter (2) est ouverte par un dispositif de manoeuvre (14) uniquement à un instant prédéterminé, défini par un signal de commande après l'ouverture de la soupape de liquide (20) de la partie d'alimentation (1).

3. Procédé selon la revendication 1 ou 2, **caractérisé en ce que**, lors du découplage, avant la séparation des deux parties (1, 2) de l'installation, les deux soupapes de liquide (6, 20) sont d'abord fermées, le canal (34) dérivé est ouvert et le liquide subsistant est soufflé dans ce canal (34) sous l'effet de l'ouverture d'une soupape de purge d'air (40) menant dans l'espace de couplage (11).

4. Système de soupapes d'une installation de revêtement pour le revêtement en série de pièces, en particulier pour la mise en oeuvre du procédé selon la revendication 1,
comportant deux soupapes (20, 6) raccordées chacune à une conduite de liquide (4, 5), parmi lesquelles l'une des soupapes (6) est montée dans une partie à alimenter (2) de l'installation et l'autre soupape (20) raccordée à la conduite d'alimentation (4) est montée dans une partie d'alimentation (1) de l'installation, laquelle peut être couplée à la partie à alimenter (2) de l'installation et être découplée de celle-ci,
et entre lesquelles est formé un espace de couplage (11) lorsque les parties (1, 2) de l'installation sont couplées l'une à l'autre,
la soupape (6) de la partie à alimenter (2) de l'installation étant ouverte et fermée par un dispositif de manoeuvre (14) situé dans la partie d'alimentation (1),
**caractérisé en ce qu'**un canal (34) dérive hors de l'espace de couplage (11), lequel mène hors du système de soupapes et peut être fermé par une soupape (30) dans la zone (33) de sa liaison avec l'espace de couplage (11).

5. Système de soupapes selon la revendication 4 ou selon le préambule de celle-ci, **caractérisé en ce que** la soupape (6) de la partie à alimenter (2) de l'installation est formée par un clapet de non retour, qui est fermé lorsque la partie à alimenter (2) de l'installation est découplée,
et **en ce que** le dispositif de manoeuvre (14) pour le clapet de non retour (6), lorsque la partie (2) de l'installation est raccordée, peut être basculée entre deux positions, dans lesquelles respectivement le clapet de non retour (6) s'ouvre et se ferme.

6. Système de soupapes selon la revendication 5, **caractérisé en ce que** le dispositif de manoeuvre (14) comporte un vérin (15) avec un piston (16), mobile dans ce dernier sous l'effet d'une force pneumatique, et un poussoir (17), qui est relié au piston (16) et qui passe à travers l'espace de couplage (11) et actionne l'élément d'obturation (7) mobile du clapet de non retour (6) en vue d'ouvrir cette dernière.

7. Système de soupapes selon la revendication 6, **caractérisé en ce que** l'élément d'obturation (7) du clapet de non retour (6) est une bille pouvant être déplacée à l'encontre de la force de rappel d'un ressort (9).

8. Système de soupapes selon l'une quelconque des revendications 4 à 7, **caractérisé en ce que** la soupape de liquide (20) de la partie d'alimentation (1) de l'installation est formée par une soupape commandée, par laquelle la conduite d'alimentation (4) peut être fermée dans la zone de la liaison avec l'espace de couplage (11).

9. Système de soupapes selon l'une quelconque des revendications 4 à 8, **caractérisé en ce que** l'espace de couplage (11) sur un de ses côtés, lequel est orienté vers la partie à alimenter (2) de l'installation, est fermé par le clapet (6) de celle-ci et sur l'autre côté opposé est fermé par le dispositif de manoeuvre (14) de cette soupape, et **en ce que** l'orifice (23) obturable de la soupape de liquide (20) de la partie d'alimentation (1) de l'installation et l'orifice (33) obturable de la soupape (30) du canal de dérivation (34) sont au moins sensiblement alignés avec la paroi de l'espace de couplage (11), qui délimite l'espace entre le clapet (6) de la partie à alimenter (2) de l'installation et le dispositif de manoeuvre (14) de celle-ci,
de telle sorte que tous les orifices (23, 33) obturables sont situés directement sur l'espace de couplage (11) délimité.

10. Système de soupapes selon l'une quelconque des revendications 4 à 9, **caractérisé en ce qu'**une conduite d'air comprimé débouche dans l'espace de couplage (11) par l'intermédiaire d'une soupape (40) commandée, dont l'orifice (43) obturable est aligné au moins sensiblement avec la paroi de l'espace de couplage (11).

11. Installation de revêtement comportant un système de soupapes selon l'une quelconque des revendications 4 à 10, dans laquelle la partie à alimenter (2) de l'installation est un pistolet pulvérisateur pouvant être monté de manière amovible et interchangeable sur un robot de peinture ou une autre machine de revêtement quelconque.

12. Installation de revêtement selon la revendication 11, **caractérisée en ce que** la partie d'alimentation (1) de l'installation est située avec ses soupapes (20, 30, 40), raccordées à l'espace de couplage (11), dans la machine de revêtement.

13. Installation de revêtement selon la revendication 11 ou 12, **caractérisée en ce que** le système de soupapes est raccordé à une conduite (4, 5), menant vers le pistolet pulvérisateur, pour le liquide de dosage qui, dans le pistolet pulvérisateur, active un piston d'un vérin contenant le produit de revêtement.

14. Installation de revêtement selon la revendication 11 ou 12, **caractérisée en ce que** le système de soupapes est raccordé à une conduite pour le produit de revêtement, menant vers le pistolet pulvérisateur.
